# EUROPEAN PATENT APPLICATION

(11) **EP 3 852 043 A1**
(43) Date of publication of application: **21.07.2021**
(21) Application number: 21150152.3
(22) Date of filing: 05.01.2021
(51) Int. Cl.: G06Q 30/02

(54) **ADVERTISEMENT PRESENTATION SYSTEM AND ADVERTISEMENT PRESENTING METHOD**

(30) Priority: 15.01.2020 JP 2020004768
(71) Applicant: TOYOTA JIDOSHA KABUSHIKI KAISHA, Toyota-shi, Aichi-ken, 471-8571 (JP)
(72) Inventor: NAKAICHI, Toshihiro, Aichi-ken, 471-8571 (JP); SAKURAI, Hideyuki, Aichi-ken, 471-8571 (JP); MIURA, Masaya, Aichi-ken, 471-8571 (JP); OHTAKE, Kazuki, Aichi-ken, 471-8571 (JP); KARAKI, Takuya, Aichi-ken, 471-8571 (JP)
(74) Representative: J A Kemp LLP

(57) **Abstract**

An advertisement presentation system (10) includes an output device (124A) provided on a mobile object (12A), an information processing device (120A), and a management device (11). The management device (11) obtains advertisement information to be generated from the output device (124A) of the mobile object (12A) scheduled to travel via a particular location, based on related information in which attribute information of people and location information at which the people having the attributes are present are related to each other in advance, and sends the advertisement information to the information processing device (120A). The information processing device (120A) receives the advertisement information from the management device (11), and outputs the advertisement information to the output device (124A), when the mobile object (12A) is present at the particular location. The output device (124A) obtains the advertisement information from the information processing device(120A), and output the advertisement information toward an outside of the mobile object (12A), when the mobile object (12A) is present at the particular location.

## Description

### BACKGROUND OF THE INVENTION

### 1. Field of the Invention

The invention relates to an advertisement presentation system and an advertisement presenting method.

### 2. Description of Related Art

A management system that manages placement of information on a mobile object is known. For example, Japanese Unexamined Patent Application Publication No. 2002-288520 (JP 2002-288520 A) discloses placement of display information directed toward the outside of a mobile object.

Also, a presentation system of an advertisement vehicle is disclosed. For example, Japanese Unexamined Patent Application Publication No. 2010-277583 (JP 2010-277583 A) discloses distribution of advertisement and questionnaire from a web server to a terminal of a user after the end of use of a vehicle by the user.

Also, a vehicular advertisement presentation system that permits presentation of advertisement of a particular company concentratedly within a particular region, by use of vehicles, is disclosed in Japanese Unexamined Patent Application Publication No. 2013-89096 (JP 2013-89096 A).

### SUMMARY OF THE INVENTION

In JP 2002-288520 A, JP 2010-277583 A, and JP 2013-89096 A, presentation of advertisement by use of a vehicle is disclosed, but a location where advertising is performed is not taken into consideration. For example, when an advertisement is presented, the advertising effect may not be enhanced unless the location where the advertisement is presented is taken into consideration.

For example, when a display device of a vehicle presents an advertisement directed at students, to the outside of the vehicle, the advertising effect due to the advertisement is small if the number of students present at a location where the vehicle is traveling is small.

In JP 2002-288520 A, JP 2010-277583 A, and JP 2013-89096 A, it is merely disclosed to present advertisement from a vehicle as one example of a mobile object, and the location at which the advertisement is presented from the vehicle is not taken into consideration.

The invention provides an advertisement presentation system and an advertisement presenting method, which make it possible to present advertisement from a mobile object, in view of a location at which the advertisement is presented.

An advertisement presentation system according to a first aspect of the invention includes an output device provided on a mobile object, an information processing device, and a management device. The management device is configured to obtain advertisement information to be generated from the output device of the mobile object that is scheduled to travel via a particular location, based on related information in which attribute information indicating attributes of people and location information indicating a location at which the people having the attributes are present are related to each other in advance, and send the advertisement information to the information processing device. The information processing device is configured to receive the advertisement information sent from the management device, and output the advertisement information to the output device, when the mobile object is present at the particular location. The output device is configured to obtain the advertisement information generated from the information processing device, and output the advertisement information toward an outside of the mobile object, when the mobile object is present at the particular location.

The management device of the advertisement presentation system obtains advertisement information to be generated from the output device of the mobile object scheduled to travel via a particular location, based on related information in which attribute information indicating attributes of people and location information indicating a location at which the people having the attributes are present are related to each other in advance, and sends the advertisement information to the information processing device. Then, the information processing device receives the advertisement information sent from the management device, and outputs the advertisement information to the output device when the mobile object is present at the particular location. Then, the output device obtains the advertisement information generated from the information processing device, and outputs the advertisement information toward the outside of the mobile object, when the mobile object is present at the particular location. In this manner, it is possible to present advertisement from the mobile object, in view of the location where the advertisement is presented. Also, since the advertisement information is generated from the output device of the mobile object at the location where there are many people having attributes suited for the advertisement, the advertising effect due to the advertisement can be enhanced. Also, when an advertiser wishes to place an advertisement directed at limited targets at a particular location, efficient advertising can be performed by using a plurality of mobile objects traveling around the particular location.

An advertisement presentation system according to a second aspect of the invention includes an output device provided on a mobile object, an information processing device, a management device, and a plurality of ordering devices. The management device is configured to send a plurality of items of ordering information each including location information indicating a location at which advertising is performed, to each of the ordering devices. Each of the ordering devices is configured to obtain the items of ordering information sent from the management device, and present the items of ordering information to a user. Each of the ordering devices is configured to obtain bid information as a combination of one of the items of ordering information selected by the user, and price information indicating a price for the selected item of ordering information, and send the bid information obtained, to the management device. The management device is configured to specify bid information of which the price information indicates the highest price, out of the bid information sent from the ordering devices, as successful bid information, and obtain advertisement information sent from one of the ordering devices which sent the bid information corresponding to the successful bid information. The advertisement information indicates an advertisement to be generated from the output device of the mobile object scheduled to travel via a particular location. The management device is configured to send the advertisement information to the information processing device. The information processing device is configured to receive the advertisement information sent from the management device, and output the advertisement information to the output device, when the mobile object is present at the particular location. The output device is configured to obtain the advertisement information generated from the information processing device, and output the advertisement information toward an outside of the mobile object, when the mobile object is present at the particular location.

The management device of the advertisement presentation system sends a plurality of items of ordering information each including location information indicating a location at which advertising is performed, to each of the ordering devices. Then, each of the ordering devices obtains these items of ordering information sent from the managing device, and present the ordering information to the user. Then, each of the ordering devices obtains bid information as a combination of the ordering information selected by the user from the ordering information, and price information indicating a price for the ordering information, and sends the obtained bid information to the management device. Then, the management device specifies bid information of which the price information indicates the highest price, out of the bid information sent from the ordering devices, as successful bid information, and obtains advertisement information which is sent from the ordering device that sent the bid information corresponding to the successful bid information, and which is to be generated from the output device of the mobile object scheduled to travel via the particular location. Then, the management device sends the advertisement information to the information processing device. Then, the information processing device receives the advertisement information sent from the management device, and outputs the advertisement information to the output device, when the mobile object is present at the particular location. Then, the output device obtains the advertisement information generated from the information processing device, and outputs the advertisement information toward the outside of the mobile object when the mobile object is present at the particular location. Thus, it is possible to present advertisement from the mobile object, in view of the location where the advertisement is presented. Also, since an auction is held for the location where advertising is performed, a management organization, etc. of the mobile object can gain larger advertisement revenue. Also, when an advertiser wishes to place an advertisement directed at limited targets at a particular location during a particular time slot, efficient advertising can be performed by using a plurality of mobile objects traveling via the particular location during the particular time slot.

In the advertisement presentation system according to the first aspect of the invention, the related information may be information in which the attribute information, the location information, and time slot information indicating a time slot during which the people having the attributes are present at the location, are related to each other in advance. The management device may be configured to obtain advertisement information to be generated from the output device of the mobile object scheduled to travel via a particular location during a particular time slot, based on the related information, and send the advertisement information to the information processing device. The information processing device may be configured to receive the advertisement information sent from the management device, and output the advertisement information to the output device, when the mobile object is present at the particular location during the particular time slot. The output device may be configured to obtain the advertisement information generated from the information processing device, and output the advertisement information toward the outside of the mobile object, when the mobile object is present at the particular location during the particular time slot. Thus, the advertisement information is generated from the output device of the mobile object at the location where there are many people having attributes suited for the advertisement; therefore, the advertising effect due to the advertisement can be enhanced.

In the advertisement presentation system according to the second aspect of the invention, the management device may be configured to send the items of ordering information further including time slot information indicating a time slot during which advertising is performed, to each of the ordering devices. The management device may be configured to obtain advertisement information to be generated from the output device of the mobile object that is scheduled to travel via a particular location during a particular time slot, and send the advertisement information to the information processing device. The information processing device may be configured to receive the advertisement information sent from the management device, and output the advertisement information to the output device, when the mobile object is present at the particular location during the particular time slot. The output device may be configured to obtain the advertisement information generated from the information processing device, and output the advertisement information toward the outside of the mobile object, when the mobile object is present at the particular location during the particular time slot. Thus, the advertisement information is generated from the output device of the mobile object at the location during the time slot suitable for the advertisement; therefore, the advertising effect due to the advertisement can be enhanced. Also, the user can select the location and time slot of the advertisement.

In the advertisement presentation system as described above, the management device may be configured to send list information including a plurality of items of advertisement candidate information to which the location information and the time slot information are related, to the information processing device. The information processing device may be configured to receive the list information sent from the management device, and present the list information to an occupant of the mobile object. The information processing device may be configured to obtain selection information indicating one of the items of advertisement candidate information selected by the occupant, from the list information, and send the obtained selection information to the management device. The management device may be configured to receive the selection information sent from the information processing device, obtain advertisement information corresponding to the received selection information, and send the advertisement information to the information processing device. The information processing device may be configured to receive the advertisement information sent from the management device, and output the advertisement information to the output device. The output device may be configured to obtain the advertisement information generated from the information processing device, and output the advertisement information toward the outside of the mobile object. Thus, when two or more mobile objects are requested to travel via a location where there are many targets of advertisement, the number of the mobile objects passing the particular location can be increased by increasing the advertisement rate, for example. Also, the mobile object side is also able to select one from two or more traveling routes; thus, even when the mobile object cannot travel along a traveling route that offers a high advertisement rate, because of a traffic jam, for example, the mobile object side can gain an advertisement rate, though it is small, by traveling along a different traveling route.

In the advertisement presentation system as described above, the information processing device may be configured to obtain track record information as a traveling route representing a series of position information of the mobile object when the advertisement information is generated from the output device toward the outside of the mobile object, and send the track record information obtained, to the management device. The management device may be configured to receive the track record information sent from the information processing device. Thus, it is possible to confirm that the advertisement information was generated from the mobile object at the particular location.

In the advertisement presentation system as described above, the information processing device may be configured to send a scheduled traveling route of the mobile object to the management device. The management device may be configured to receive the scheduled traveling route sent from the information processing device, obtain advertisement information to be generated from the output device of the mobile object, according to the scheduled traveling route, and send the advertisement information to the information processing device.

In the advertisement presentation system as described above, the management device may be configured to send the advertisement information to each of a plurality of the information processing devices including a first information processing device and a second information processing device. When a first mobile object is present at a particular location, the first information processing device may be configured to output the advertisement information to a first output device provided on the first mobile object. When a second mobile object is present at the particular location, at a time corresponding to a time at which the first information processing device outputs the advertisement information to the first output device, the second information processing device may be configured to output the advertisement information to a second output device provided on the second mobile object.

In the advertisement presentation system as described above, the advertisement information may be moving image information, and the management device may be configured to send the advertisement information to each of a plurality of the information processing devices including a first information processing device and a second information processing device. When a first mobile object is present at a particular location, the first information processing device may be configured to output a first-clock-time image as a first part of the advertisement information, to a first output device provided on the first mobile object. When a second mobile object is present at the particular location, the second information processing device may be configured to output a second-clock-time image as a second part of the advertisement information, to a second output device provided on the second mobile object.

In the advertisement presentation system as described above, the management device may be configured to send the advertisement information to each of a plurality of the information processing devices including a first information processing device and a second information processing device. When a first mobile object is present at a particular location, the first information processing device may be configured to output first advertisement information to a first output device provided on the first mobile object. When a second object is present at the particular location, the second information processing device may be configured to output second advertisement information to a second output device provided on the second mobile object.

An advertisement presenting method according to a third aspect of the invention is executed by an advertisement presentation system including an output device provided on a mobile object, an information processing device, and a management device. The advertisement presenting method includes: causing the management device to obtain advertisement information to be generated from the output device of the mobile object that is scheduled to travel via a particular location, based on related information in which attribute information indicating attributes of people and location information indicating a location at which the people having the attributes are present are related to each other in advance, and send the advertisement information to the information processing device, causing the information processing device to receive the advertisement information sent from the management device, and output the advertisement information to the output device, when the mobile object is present at the particular location, and causing the output device to obtain the advertisement information generated from the information processing device, and output the advertisement information toward an outside of the mobile object, when the mobile object is present at the particular location.

An advertisement presenting method according to a fourth aspect of the invention is executed by an advertisement presentation system including an output device provided on a mobile object, an information processing device, and a management device. The advertisement presenting method includes: causing the management device to send a plurality of items of ordering information each including location information indicating a location at which advertising is performed, to each of the ordering devices, causing each of the ordering devices to obtain the items of ordering information sent from the management device, and present the items of ordering information to a user, causing each of the ordering devices to obtain bid information as a combination of one of the items of ordering information selected by the user, and price information indicating a price for the selected item of ordering information, and send the bid information obtained, to the management device, and causing the management device to specify bid information of which the price information indicates the highest price, out of the bid information sent from the ordering devices, as successful bid information, and obtain advertisement information sent from one of the ordering devices which sent the bid information corresponding to the successful bid information. The advertisement information indicates an advertisement to be generated from the output device of the mobile object scheduled to travel via a particular location. The advertisement presenting method further includes: causing the management device to send the advertisement information to the information processing device, causing the information processing device to receive the advertisement information sent from the management device, and output the advertisement information to the output device, when the mobile object is present at the particular location, and causing the output device to obtain the advertisement information generated from the information processing device, and output the advertisement information toward an outside of the mobile object, when the mobile object is present at the particular location.

As described above, this invention provides an advantageous effect of presenting an advertisement from a mobile object, in view of the location where the advertisement is presented.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view useful for describing the summary of embodiments of the invention;
FIG. 2 is a schematic block diagram of an advertisement presentation system according to a first embodiment;
FIG. 3 is a view showing one example of related information;
FIG. 4 is a view showing one example of information used for generating the related information;
FIG. 5 is a view showing one example of advertisement information for each set of attributes of people;
FIG. 6 is a view showing an example of the configuration of a computer of an information processing device that constitutes the advertisement presentation system;
FIG. 7 is a view showing an example of the configuration of a computer of a management server that constitutes the advertisement presentation system;
FIG. 8 is an explanatory view useful for describing an example of operation of the advertisement presentation system of the first embodiment;
FIG. 9 is a view showing one example of a sequence executed by the advertisement presentation system of the first embodiment;
FIG. 10 is an explanatory view showing one example of advertisement candidate information;
FIG. 11 is a schematic block diagram of an advertisement presentation system according to a second embodiment;
FIG. 12 is a view showing one example of ordering information;
FIG. 13 is a view showing one example of a sequence executed by the advertisement presentation system of the second embodiment;
FIG. 14 is an explanatory view useful for describing an example of operation of the advertisement presentation system of the second embodiment;
FIG. 15 is a view useful for describing an effect of the embodiment;
FIG. 16 is a view showing a modified example of the embodiment; and
FIG. 17 is a view showing a modified example of the embodiment.

### DETAILED DESCRIPTION OF EMBODIMENTS

An advertisement presentation system of one embodiment will be described with reference to the drawings.

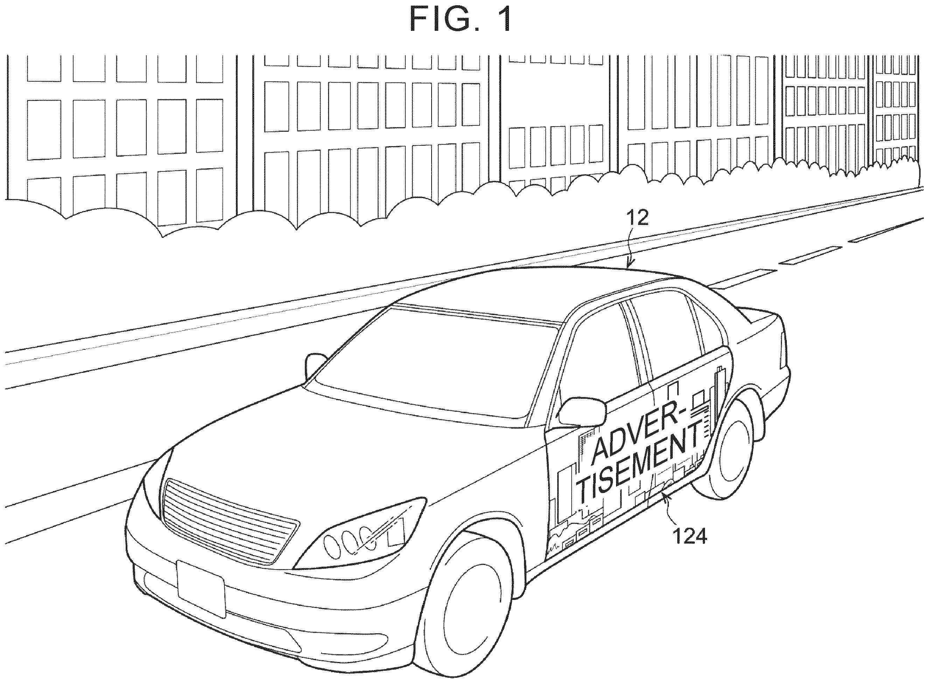

FIG. 1 is an explanatory view useful for describing the summary of this embodiment. As shown in FIG. 1, an output device 124 for outputting advertisement information is provided on a side face of a body of a vehicle 12 as one example of a mobile object. Advertisement information as shown in FIG. 1 is generated from the output device 124. The vehicle 12 travels while outputting the advertisement information from the output device 124. The advertisement information generated from the output device 124 catches the eyes of people present outside the vehicle 12, and is thus expected to have an advertising effect owing to this form.

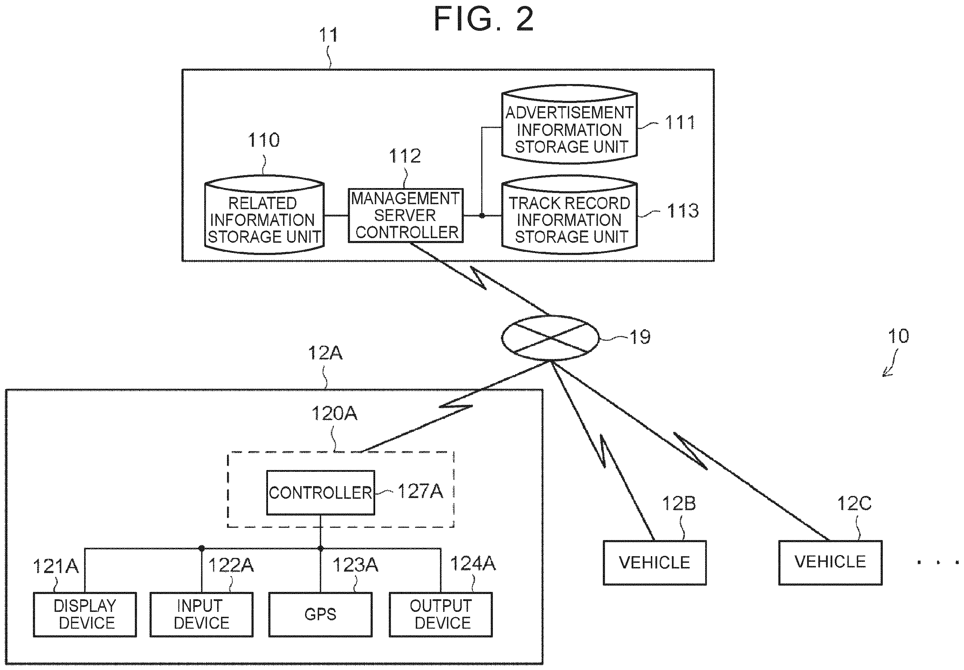

FIG. 2 is a block diagram showing one example of the configuration of the advertisement presentation system 10 according to this embodiment. As shown in FIG. 2, the advertisement presentation system 10 has a management server 11, and a plurality of vehicles 12A, 12B, 12C, .... The management server 11 is connected to the vehicles 12A, 12B, 12C, ..., via a given communicating means 19. While only the vehicles 12A, 12B, 12C are illustrated in FIG. 2 as the above-mentioned plurality of vehicles, there are actually supposed to be much more vehicles. In the following description, A, B, or C will not be attached to the numeral of each reference sign in the cases other than the case where the reference sign designates each part included in a particular vehicle. For example, the vehicle will be called "vehicle 12", in the cases other than the case where a particular vehicle is referred to.

As shown in FIG. 2, the management server 11 functionally includes a related information storage unit 110, advertisement information storage unit 111, management server controller 112, and track record information storage unit 113.

The related information storage unit 110 stores related information in which attribute information of people, location information indicating a location where the people having attributes corresponding to the attribute information are present, and time slot information indicating a time slot during which the people having the attributes corresponding to the attribute information are present at the location, are related to each other in advance. The attribute information of people includes, for example, the gender, age, etc. of the people. As the location information, locations, such as "Shibuya", and "Omotesando", are included. In this connection, information, such as the latitude and longitude, may be adopted as the location information. The location information may be more detailed information, such as "scramble crossing in Shibuya".

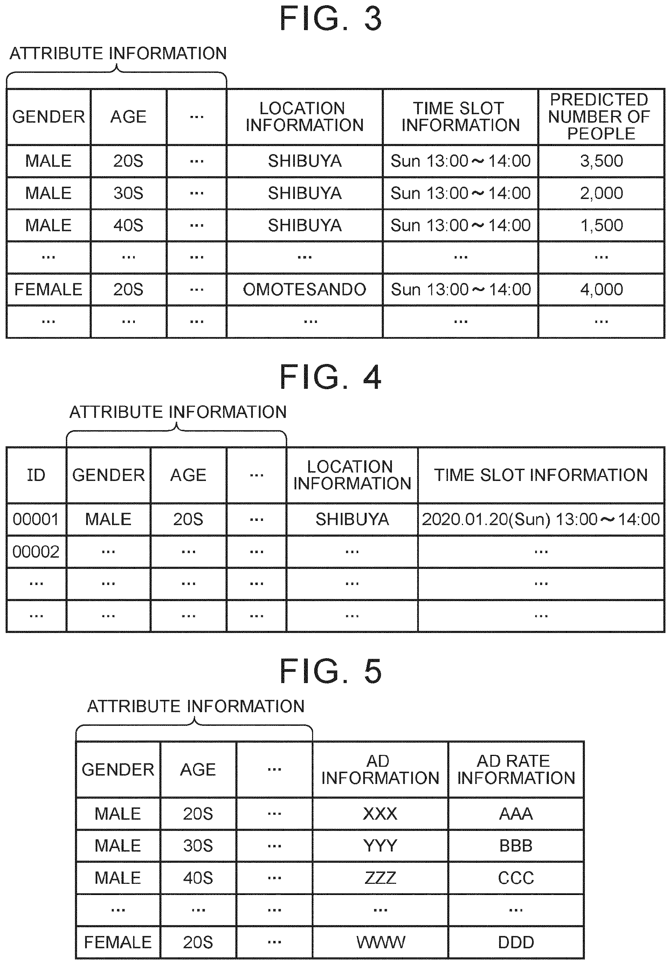

FIG. 3 shows one example of the related information stored in the related information storage unit 110. For example, the related information is stored in the form of a table, as shown in FIG. 3. In the table shown in FIG. 3, the attribute information of people, location information, time slot information, and predicted number of people, which are associated with each other, are stored in the table shown in FIG. 3. The predicted number of people may be replaced with another index, such as a score.

The related information as shown in FIG. 3 is created in advance from information as indicated in in FIG. 4, for example, The information of FIG. 4 has an ID for identifying each person, attribute information of the person concerned, location information, and time slot information, which are associated with each other. One example of the information indicates that a person having ID "00001" is a "male" in his "20s", who was present in "Shibuya" between 13:00 and 14:00 on Jan. 20 (Sun.), 2020. This type of information is collected from a portable terminal carried by the person.

The advertisement information storage unit 111 stores advertisement information to be generated from the output device 124 of the vehicle 12. FIG. 5 shows one example of advertisement information stored in the advertisement information storage unit 111. The advertisement information is stored in the form of a table, as shown in FIG. 5, for example. In the table shown in FIG. 5, attribute information of people, advertisement information, advertisement rate information, which are associated with each other, are stored. For example, advertisement information "XXX" indicated in FIG. 5 is directed at males in their 20s, and its advertisement rate is "AAA".

The management server controller 112 obtains a scheduled traveling route sent from the vehicle 12, and time slot information indicating a time slot during which the vehicle 12 will travel on the scheduled traveling route. Then, the management server controller 112 obtains advertisement information stored in the advertisement information storage unit 111, according to the scheduled traveling route of the vehicle 12, referring to the related information stored in the related information storage unit 110. Then, the management server controller 112 sends the obtained advertisement information to an information processing device 120 of the vehicle 12. More detailed processing of the management server controller 112 will be described later.

The track record information storage unit 113 stores information indicating a traveling route on which the vehicle 12 actually travelled while outputting advertisement information, and the time slot of traveling, as track record information. The track record information of each vehicle stored in the track record information storage unit 113 is used for payment of the advertisement rate.

The configuration of the vehicle 12A is substantially identical with those of the vehicles 12B, 12C; therefore, only the configuration of the vehicle 12A will be described below.

As shown in FIG. 2, the vehicle 12A includes an information processing device 120A, display device 121A, input device 122A, GPS 123A, and output device 124A. The information processing device 120A may be a device installed on the vehicle 12A, or a portable terminal, or the like, present in the vehicle 12A.

The information processing device 120A sends and receives information to and from the management server 11, and causes the output device 124A to output advertisement information. The information processing device 120A functionally includes a controller 127A, as shown in FIG. 2.

The controller 127A transfers information among the management server 11, display device 121A, input device 122A, GPS 123A, and output device 124A.

The display device 121A outputs information to an occupant of the vehicle 12A. For example, a display, or the like, may be adopted as the display device 121A.

The input device 122A accepts information entered by the occupant of the vehicle 12A. For example, a numeric keypad of push button type, touch pad, or the like, may be adopted as the input device 122A.

The GPS 123A sequentially obtains position information indicating the position of the vehicle 12A.

The output device 124A outputs advertisement information sent from the management server 11, toward the outside of the vehicle 12A. For example, a display, or the like, may be adopted as the output device 124A.

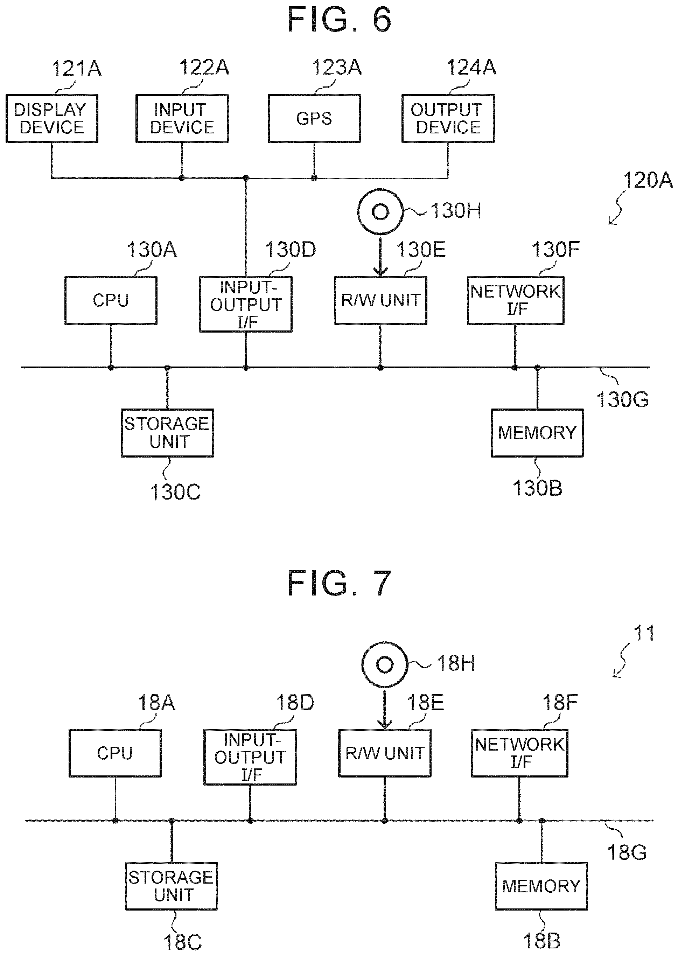

The information processing device 120A of the vehicle 12Acan be provided by a computer as shown in FIG. 6, for example. The computer as shown in FIG. 6 includes a central processing unit (CPU) 130A, a memory 130B as a temporary storage area, and a non-volatile storage unit 130C. The computer also includes an input-output interface (I/F) 130D to which the display device 121A, input device 122A, GPS 123A, and output device 124A are connected, and a read/write (R/W) unit 130E that controls reading and writing of data from/into a recording medium 130H. The computer further includes a network interface (I/F) 130F connected to a network, such as the Internet. The CPU 130A, memory 130B, storage unit 130C, input-output I/F 130D, R/W unit 130E, and network I/F 130F are connected to each other via a bus 130G.

The storage unit 130C can be provided by a hard disk drive (HDD), solid state drive (SSD), flash memory, or the like. Programs for achieving functions of the information processing device 120A as a computer are stored in the storage unit 130C as a storage medium. The CPU 130Areads a program from the storage unit 130C, develops the program on the memory 130B, and sequentially executes process steps included in the program.

The management server 11 can be provided by a computer as shown in FIG. 7. The computer as shown in FIG. 7 includes a CPU 18A, a memory 18B as a temporary storage area, and a non-volatile storage unit 18C. The computer also includes an input-output interface (I/F) 18D to which the display device 121A, input device 122A, GPS 123A, and output device 124A are connected, and a read/write (R/W) unit 18E that controls reading and writing of data from and into a recording medium 18H. The computer further includes a network interface (I/F) 18F connected to a network, such as the Internet. The CPU 18A, memory 18B, storage unit 18C, input-output I/F 18D, R/W unit 18E, and network I/F 18F are connected to each other via a bus 18G.

The storage unit 18C can be provided by a hard disk drive (HDD), solid state drive (SSD), flash memory, or the like. In the storage unit 18C as a storage medium, programs for causing the management server 11 to function as a computer are stored. The CPU 18A reads a program from the storage unit 18C, develops the program on the memory 18B, and sequentially executes process steps included in the program.

Next, the operation of the advertisement presentation system 10 of the embodiment will be described. In the following, the case where the vehicle 12A is a taxi will be described by way of example.

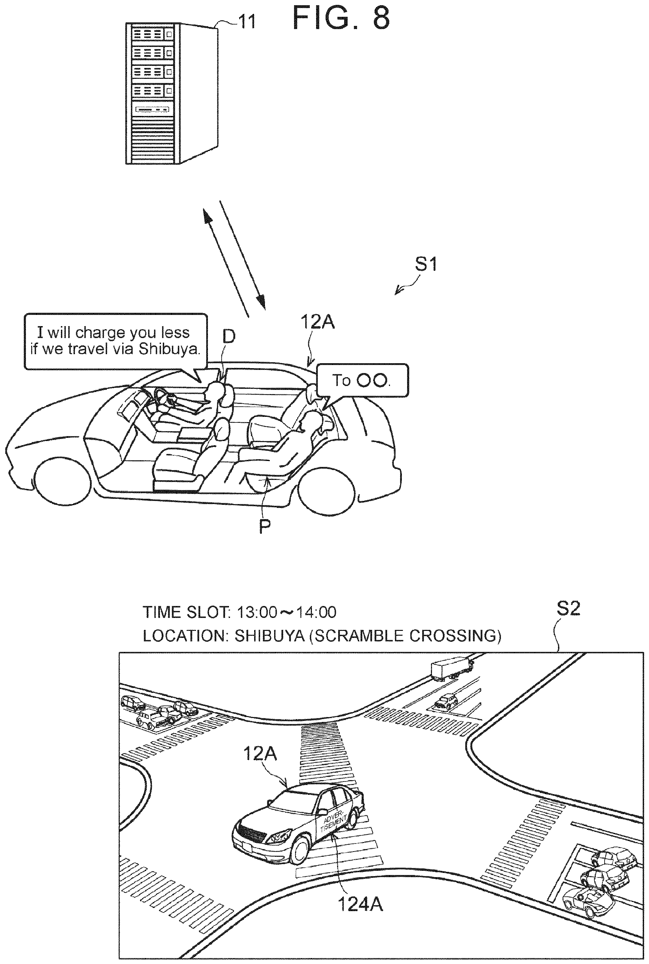

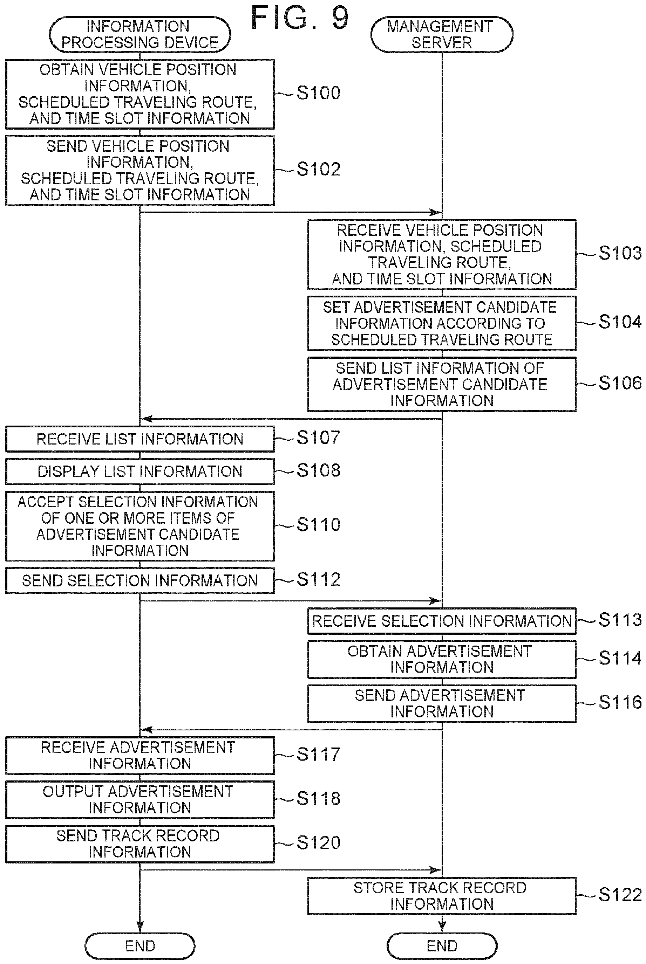

As shown in FIG. 8, a scene S1 where a passenger P gets in the vehicle 12A, which is a taxi, is assumed. In this case, a driver D of the vehicle 12Afinds out a destination from the passenger P, and enters information indicating the destination into a car navigation system (not shown). The car navigation system (not shown) generates a scheduled traveling route from the current position to the destination, and time slot information indicating a time slot during which the vehicle 12 travels on the scheduled traveling route, based on the information indicating the destination. Then, a sequence shown in FIG. 9 is executed.

In step S100, the controller 127A of the information processing device 120A obtains position information indicating the current position of the vehicle 12A obtained by the GPS 123A, scheduled traveling route generated by the car navigation system, and time slot information indicating a time slot during which the vehicle 12A travels on the scheduled traveling route.

In step S102, the controller 127A of the information processing device 120A sends the current position information of the vehicle 12A, scheduled traveling route, and time slot information obtained in step S100, to the management server 11.

In step S103, the management server controller 112 of the management server 11 receives the current position information of the vehicle 12A, scheduled traveling route, and time slot information sent from the information processing device 120A in step S102.

Then, in step S104, the management server controller 112 sets advertisement candidate information according to the current position information of the vehicle 12A, scheduled traveling route of the vehicle 12A, and time slot information received in step S103.

More specifically, the management server controller 112 sets advertisement candidate information to be generated at a location in the vicinity of the current position information of the vehicle 12A and the scheduled traveling route of the vehicle 12A, from among the advertisement information stored in the advertisement information storage unit 111. For example, the location in the vicinity means a location that falls within a range of a predetermined distance from the current position information of the vehicle 12A and the scheduled traveling route of the vehicle 12A.

For example, the case where the current position information of the vehicle is "Roppongi", the destination is "Shinjuku", and "Shibuya" and "Omotesando" exist within a range of a predetermined distance from the scheduled traveling route, will be considered. In the case where the vehicle travels via "Shibuya", the scheduled time slot during which the vehicle passes "Shibuya" is "13:00 - 14:00" on "Sunday". In the case where the vehicle travels via "Omotesando", the scheduled time slot during which the vehicle passes "Omotesando" is also "13:00 - 14:00" on "Sunday".

In this case, in step S104, the management server controller 112 sets advertisement information "XXX" directed at "males in 20s", out of the advertisement information of FIG. 5, as advertisement candidate information, since the predicted number of people "3,500" in the row having "males in 20s", out of the related information of FIG. 3, is equal to or larger than a preset threshold value.

Also, in step S104, the management server controller 112 sets advertisement information "WWW" directed at "females in 20s", out of the advertisement information of FIG. 5, as advertisement candidate information, since the predicted number of people "4,000" in the row having "females in 20s", out of the related information of FIG. 3, is equal to or larger than a preset threshold value.

In step S106, the management server controller 112 sends list information as a list of a plurality of items of advertisement candidate information obtained in step S104, to the information processing device 120A.

In step S107, the controller 127A of the information processing device 120A receives the list information sent from the management server 11 in step S106.

Then, in step S108, the controller 127A causes the display device 121A to display the list information received in step S107, so as to present the list information to the driver D as an occupant of the vehicle.

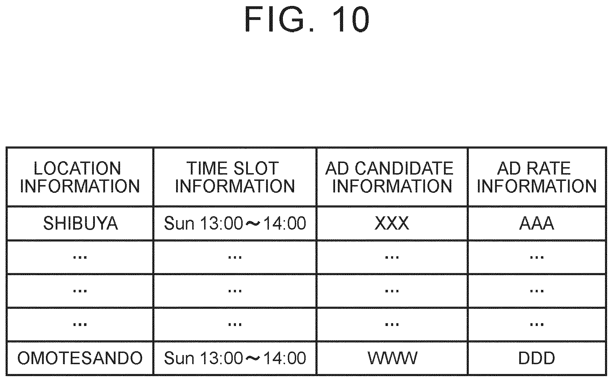

FIG. 10 shows an example of the list information. As shown in FIG. 10, in the list information, the location information, time slot information, advertisement candidate information, and advertisement rate information are related to each other.

The driver D as an occupant of the vehicle 12A checks the list information. Then, the driver D says "I will charge you less if we travel via Shibuya", to the passenger P, as shown in the scene S1 of FIG. 8, for example. For example, when the advertisement candidate information "XXX" shown in FIG. 10 is generated from the output device 124A at "Shibuya", the advertisement rate "AAA" is paid to a taxi company as an owner of the information processing device 120A or output device 124A of the vehicle 12A; therefore, the taxi fare can be reduced according to the advertisement rate "AAA".

When the driver D gains an agreement about traveling via "Shibuya" from the passenger P, the driver D selects one or more items of advertisement candidate information to be advertised while the vehicle is passing "Shibuya", from the list information. For example, when the input device 122A is a touch panel, the driver D touches and selects advertisement candidate information corresponding to "Shibuya", from among the list information displayed.

In step S110, the controller 127A accepts selection information indicating the advertisement candidate information selected by the occupant of the vehicle 12A.

In step S112, the controller 127A sends the selection information accepted in step S110, to the management server 11.

In step S113, the management server controller 112 receives the selection information sent from the information processing device 120A in step S112.

Then, in step S114, the management server controller 112 obtains advertisement information corresponding to the selection information received in step S113, from the advertisement information storage unit 111. The advertisement information is image or video information. The advertisement information may be voice information.

In step S116, the management server controller 112 sends the advertisement information obtained in step S114, to the information processing device 120A. As a result, the advertisement information "XXX" directed at "males in 20s" is sent to the information processing device 120A of the vehicle 12A that is scheduled to travel via "Shibuya" as a particular location.

In step S117, the controller 127A receives the advertisement information sent from the management server 11 in step S116.

Then, in step S118, the controller 127A outputs the advertisement information obtained in step S117 to the output device 124A, when the vehicle 12A is present at the particular location during the particular time slot. More specifically, when the position information sequentially obtained by the GPS 123A of the vehicle 12A lies within a range of the particular location, and it is within the particular time slot, the controller 127A controls the output device 124A so that the advertisement information received in step S117 is generated from the output device 124A.

The output device 124A obtains the advertisement information generated from the information processing device 120A, and outputs the advertisement information toward the outside of the vehicle 12A when the vehicle 12A is present at the particular location during the particular time slot. Thus, as shown in a scene S2 of FIG. 8, the advertisement information "XXX" directed at "males in 20s" is generated from the output device 124A of the vehicle 12A, at "Shibuya", during "13:00 - 14:00" on "Sunday".

In step S120, the controller 127A of the information processing device 120A obtains a traveling route representing a series of position information of the vehicle 12A while the advertisement information is generated from the output device 124A to the outside of the vehicle 12A, from the GPS 123A. Then, the controller 127A sends track record information as a combination of the time slot during which the vehicle 12A traveled while outputting the advertisement information, and the traveling route taken by the vehicle 12A, to the management server 11.

In step S122, the management server controller 112 of the management server 11 receives the track record information sent from the information processing device 120A in step S120, and stores the information in the track record information storage unit 113.

The track record information of each vehicle stored in the track record information storage unit 113 is used at the time of payment of the advertisement rate to the taxi company.

As described above, the management server of the advertisement presentation system according to this embodiment obtains advertisement information to be generated from the output device of the vehicle that is scheduled to travel via a particular location, based on the related information in which the attribute information indicating attributes of people and the location information indicating a location at which the people having the attributes are present are related to each other in advance. The management server sends the advertisement information to the information processing device. Then, the information processing device receives the advertisement information sent from the management server, and outputs the advertisement information to the output device, when the vehicle is present at the particular location. Then, the output device receives the advertisement information generated from the information processing device, and outputs the advertisement information toward the outside of the vehicle, when the vehicle is present at the particular location. Thus, it is possible to present an advertisement from the vehicle, in view of the location at which the advertisement is presented. Since the advertisement information is generated from the output device of the vehicle, at the location with many people having the attributes suited for the advertisement, the advertising effect due to the advertisement can be enhanced.

Also, the management server of the advertisement presentation system according to this embodiment obtains advertisement information to be generated from the output device of the vehicle that is scheduled to travel via the particular location during the particular time slot, based on the related information in which the attribute information indicating attributes of people, location information indicating a location at which the people having the attributes are present, and time slot information during which the people having the attributes are present at the location are related to each other in advance. Then, the management server sends the obtained advertisement information to the information processing device. Then, the information processing device receives the advertisement information sent from the management server, and outputs the advertisement information to the output device, when the vehicle is present at the particular location during the particular time slot. Then, the output device receives the advertisement information generated from the information processing device, and outputs the advertisement information toward the outside of the vehicle, when the vehicle is present at the particular location during the particular time slot. Thus, the advertisement information is generated from the output device of the vehicle, at a location during a time slot where there are many people having attributes suited for the advertisement; therefore, the advertising effect due to the advertisement is enhanced. More specifically, in view of the time slot and location where there are many people having certain attributes, it is possible to cause the vehicle to output advertisement information directed at students, on a route to school during a time slot in which the students go home, for example.

Next, a second embodiment will be described. An advertisement presentation system of the second embodiment is different from that of the first embodiment in that the location and time slot where advertisement information is presented are auctioned, and the advertisement rate is determined according to the auction.

Advertising at a location congested with people is considered to have a high advertising effect or effect of publicity. Thus, the advertisement rate for advertisement information generated from the output device of the vehicle is considered to be different depending on the time slot and the location.

Thus, the advertisement presentation system of the second embodiment determines the advertisement rate of advertisement information by auction, according to the time slot and location where the advertisement information is generated from the vehicle.

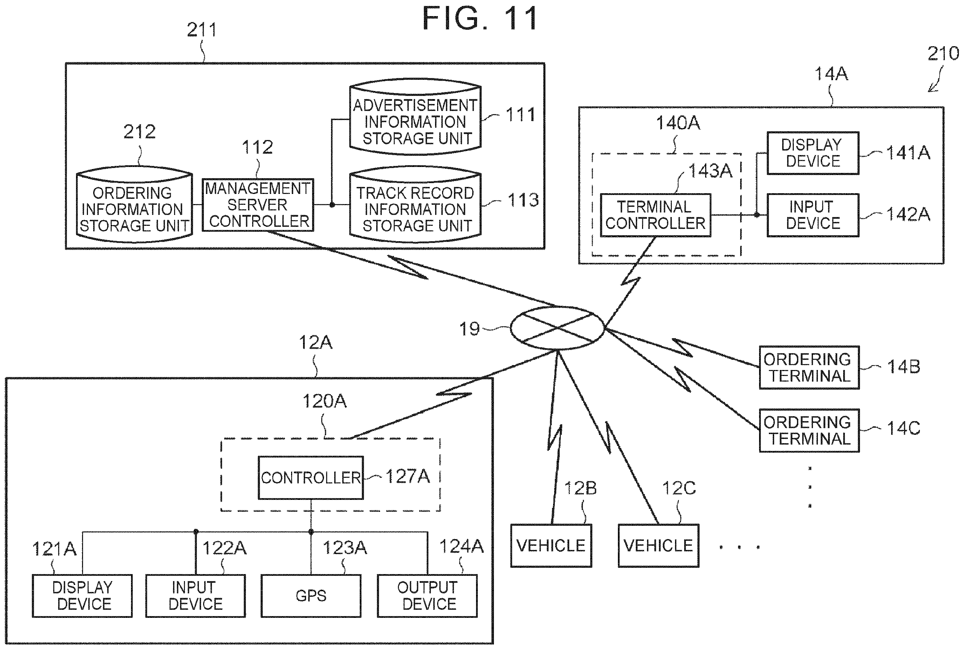

FIG. 11 is a block diagram showing one example of the configuration of an advertisement presentation system 210 according to the second embodiment. As shown in FIG. 11, the advertisement presentation system 210 includes a management server 211, a plurality of vehicles 12A, 12B, 12C, ..., and a plurality of ordering terminals 14A, 14B, 14C, ...as one example of ordering devices. The management server 211, vehicles 12A, 12B, 12C, ..., and ordering terminals 14A, 14B, 14C, ... are connected to each other via a given communicating means 19. While only the ordering terminals 14A, 14B, 14C are illustrated as a plurality of ordering terminals in FIG. 11, there are actually supposed to be much more ordering terminals.

As shown in FIG. 11, the management server 211 functionally includes an ordering information storage unit 212, advertisement information storage unit 111, management server controller 112, and track record information storage unit 113.

The ordering information storage unit 212 stores a plurality of items of ordering information in which time slot information and location information are related to each other. The time slot information represents a time slot during which advertisement information is generated from the output device of the vehicle. Also, the location information represents a location at which advertisement information is generated from the output device of the vehicle.

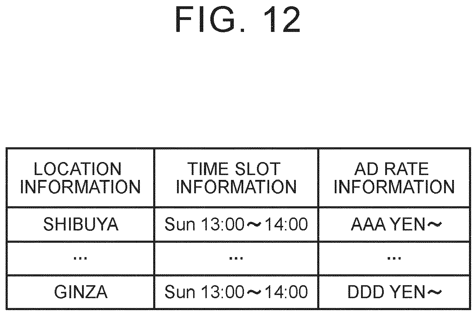

FIG. 12 shows one example of ordering information stored in the ordering information storage unit 212. For example, the ordering information is stored in the form of a table, as shown in FIG. 12. In the table shown in FIG. 12, the location information, time slot information, and advertisement rate information, which are associated with each other, are stored. The location information and time slot information may not be associated with the advertisement rate information.

The management server controller 112 presents the ordering information to the ordering terminals 14A, 14B, 14C, ..., and auctions the time slot and location for advertisement generated from the vehicle. Detailed processing of the management server controller 112 will be described later.

Since the configuration of the ordering terminal 14A is substantially identical with those of the other ordering terminals 14B, 14C, the configuration of only the ordering terminal 14A will be described below.

As shown in FIG. 11, the ordering terminal 14A functionally includes a terminal control device 140A, display device 141A, and input device 142A.

The terminal control device 140Atransfers information between the display device 141A and the input device 142A.

The display device 141A outputs information to a user who operates the ordering terminal 14A. For example, a display, or the like, may be adopted as the display device 141A.

The input device 142A accepts information entered by the user who operates the ordering terminal 14A. For example, a numeric keypad of push button type, touch pad, or the like, may be adopted as the input device 142A.

The terminal control device 140Amay be provided by a computer as shown in FIG. 7, for example.

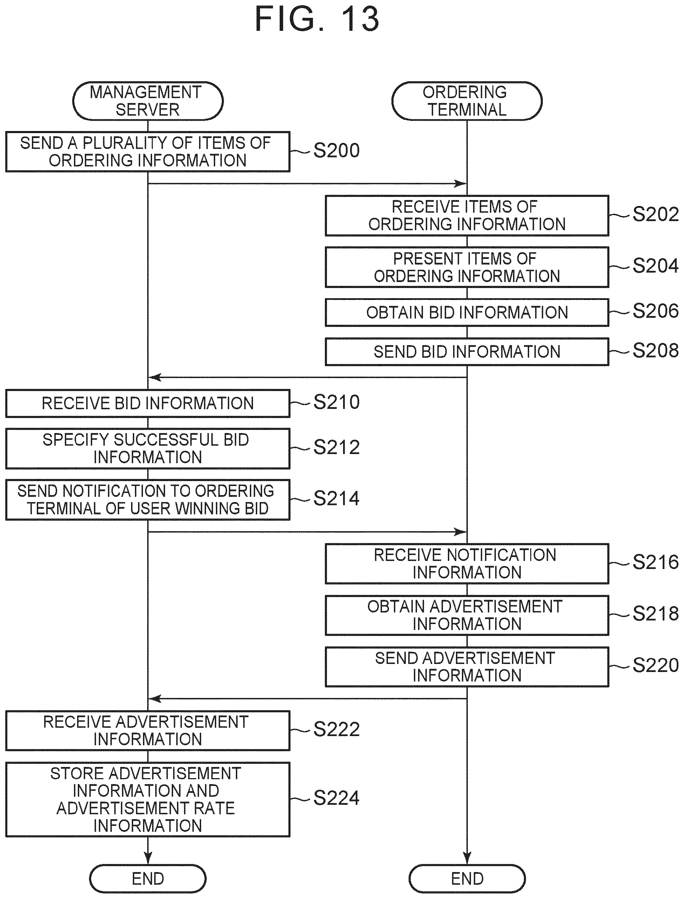

Next, the operation of the advertisement presentation system 210 of the second embodiment will be described. When the advertisement presentation system 210 is activated, a sequence shown in FIG. 13 is executed.

In step S200, the management server controller 112 of the management server 11 reads a plurality of items of ordering information from the ordering information storage unit 212, and sends the read items of ordering information, to each of the ordering terminals 14A, 14B, 14C, ....

In step S202, a terminal controller 143A of the terminal control device 140A of the ordering terminal 14A, as one of the ordering terminals 14A, 14B, 14C, ..., receives the plural items of ordering information sent from the management server 11 in step S200.

In step S204, the terminal controller 143A causes the display device 141A to display the plural items of ordering information received in step S202, so as to present the ordering information to the user.

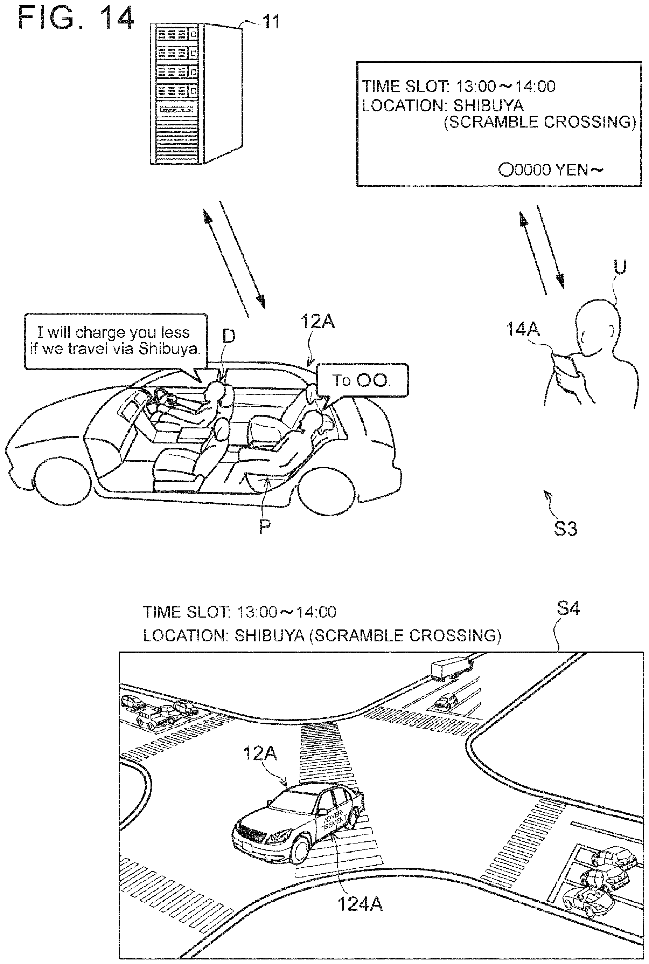

For example, as shown in a scene S3 of FIG. 14, a plurality of items of ordering information is sent from the management server 211 to the ordering terminal 14A, and the ordering information is presented to a user U.

Then, the user U checks the plural items of ordering information, as shown in a scene S3 of FIG. 14, and enters bid information that is a combination of a particular item of ordering information and price information indicating a price for the ordering information, via the input device 142A.

In step S206, the terminal controller 143A obtains the bid information as a combination of the ordering information selected by the user, from the plural items of ordering information presented in step S204, and price information indicating the price for the ordering information. The bid information includes the ordering information selected by the user, and the price information indicating the price for the ordering information. The price information is set by the user. For example, the bid information includes time slot information and location information, such as "13:00 - 14:00, Shibuya", and price information "AAA1 yen".

In step S208, the terminal controller 143A sends the bid information obtained in step S206 to the management server 11.

In step S210, the management server controller 112 of the management server 11 receives the bid information sent from each of the ordering terminals 14A, 14B, 14C, ....

In step S212, the management server controller 112 specifies the bid information of which the price information indicates the highest price, for an advertisement corresponding to a particular time slot and a particular location, out of the bid information sent from each of the ordering terminals 14A, 14B, 14C, ..., as successful bid information. For example, where difference prices are presented from the respective ordering terminals 14A, 14B, 14C, ..., with respect to "13:00 - 14:00, Shibuya", the bid information corresponding to the highest price is specified as successful bid information.

In step S214, the management server controller 112 sends notification information indicating a notice of successful bid, to the ordering terminal corresponding to the bid information specified as the successful bid information in step S212. Here, it is assumed that the user operating the ordering terminal 14A won the bid for the advertisement in "13:00 - 14:00, Shibuya".

In step S216, the terminal controller 143A of the ordering terminal 14A receives the notification information sent in step S214.

The user who operates the ordering terminal 14A confirms that he/she won the bid for a right to place an advertisement in "13:00 - 14: 00, Shibuya", and enters advertisement information to be placed for advertising in "13:00 - 14:00, Shibuya", into the ordering terminal 14A. The advertisement information to be placed for advertising in "13:00 - 14:00, Shibuya" may be stored in advance in a certain storage unit (not shown) within the ordering terminal 14A.

In step S218, the terminal controller 143A of the ordering terminal 14A obtains the advertisement information to be placed for advertising in "13:00 - 14:00, Shibuya" .

In step S220, the terminal controller 143A of the ordering terminal 14A sends the advertisement information obtained in step S218 to the management server 11.

In step S222, the management server controller 112 of the management server 11 receives the advertisement information sent in step S220.

In step S224, the management server controller 112 sets the price information of the successful bid information specified in step S212, as advertisement rate information indicating the advertisement rate of the advertisement information received in step S222. Then, the management server controller 112 stores a combination of the advertisement information received in step S222 and the advertisement rate information, in the advertisement information storage unit 111.

The advertisement information stored in the advertisement information storage unit 111 is set as advertisement information to be generated from the output device of the vehicle. Then, the management server controller 112 of the management server 11 outputs the advertisement information stored in the advertisement information storage unit 111, to the information processing device 120A of the vehicle 12A, as in the first embodiment. As a result, the advertisement information of the ordering terminal 14A is generated from the output device 124A of the vehicle 12A in "13:00 - 14:00, Shibuya", as shown in a scene S4 of FIG. 14.

As described above, the management server of the advertisement presentation system according to the second embodiment sends a plurality of items of ordering information each including location information indicating a location where advertising is performed, to each of a plurality of ordering terminals. Then, each of the ordering terminals obtains the items of ordering information sent from the management server, presents the ordering information to the user, and obtains bid information as a combination of the ordering information selected by the user, from the items of ordering information, and price information indicating a price for the selected ordering information. Then, the ordering terminal sends the obtained bid information to the management server. Then, the management server specifies the bid information of which the price information indicates the highest price, out of the bid information sent from the respective ordering terminals, as successful bid information, and obtains advertisement information which is sent from the ordering terminal that sent the bid information corresponding to the successful bid information, and which is to be generated from the output device of the vehicle scheduled to travel via a particular location. Then, the management server sends the advertisement information to the information processing device of the vehicle. Then, the information processing device of the vehicle receives the advertisement information sent from the management server, and outputs the advertisement information to the output device when the vehicle is present at the particular location. Then, the output device of the vehicle obtains the advertisement information generated from the information processing device, and outputs the advertisement information toward the outside of the vehicle, when the vehicle is present at the particular location. Thus, it is possible to present the advertisement from the vehicle, in view of the location where the advertisement is presented. Also, since an auction is held for the location where advertising is performed, a management organization, or the like, of the vehicle is able to gain increased advertising revenue.

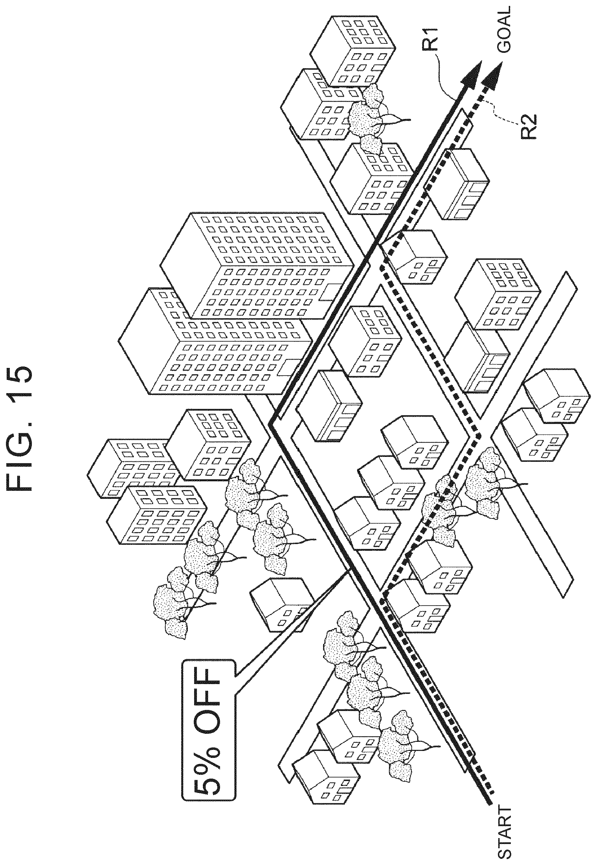

As described above, according to this embodiment, when the vehicle travels along a traveling route R1, the transportation fee can be reduced by 5%, as compared with the case where the vehicle travels along a traveling route R2, as shown in FIG. 15, for example. Also, according to this embodiment, it is possible to suggest two traveling routes, i.e., a traveling route that provides a large advertising effect with a reduced transportation fee, though it takes increased time, and a traveling route that requires the shortest time, to a passenger, and have the passenger select one of the traveling routes, for the purpose of reducing a burden on the passenger.

While the processing performed by each device in the above embodiments is described as software processing performed by executing programs, it may be processing performed by hardware, or may be processing performed by a combination of software and hardware. Also, programs stored in the ROM may be stored in various storage media, and distributed.

Further, it is to be understood that the invention is not limited to the above embodiments, but may be embodied with various modifications, without departing from the principle of the invention.

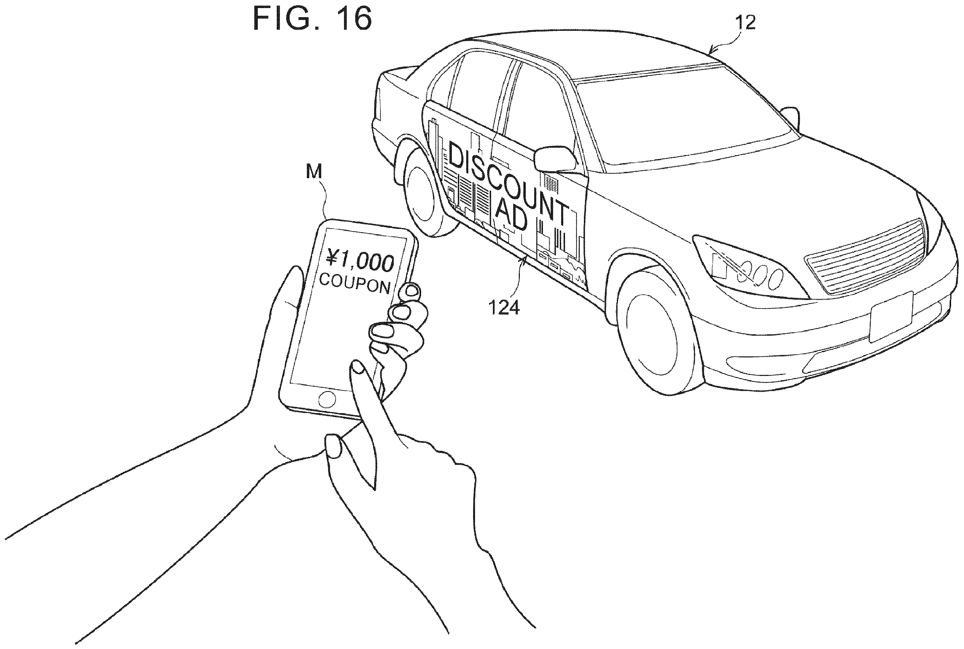

In the illustrated embodiments, advertisement information is simply generated from the output device 124A of the vehicle 12A. However, the invention is not limited to this case. For example, as shown in FIG. 16, advertisement information may include a QR code (registered trademark), or the like, and a discount coupon can be obtained when the QR code (registered trademark) is read with a portable terminal M.

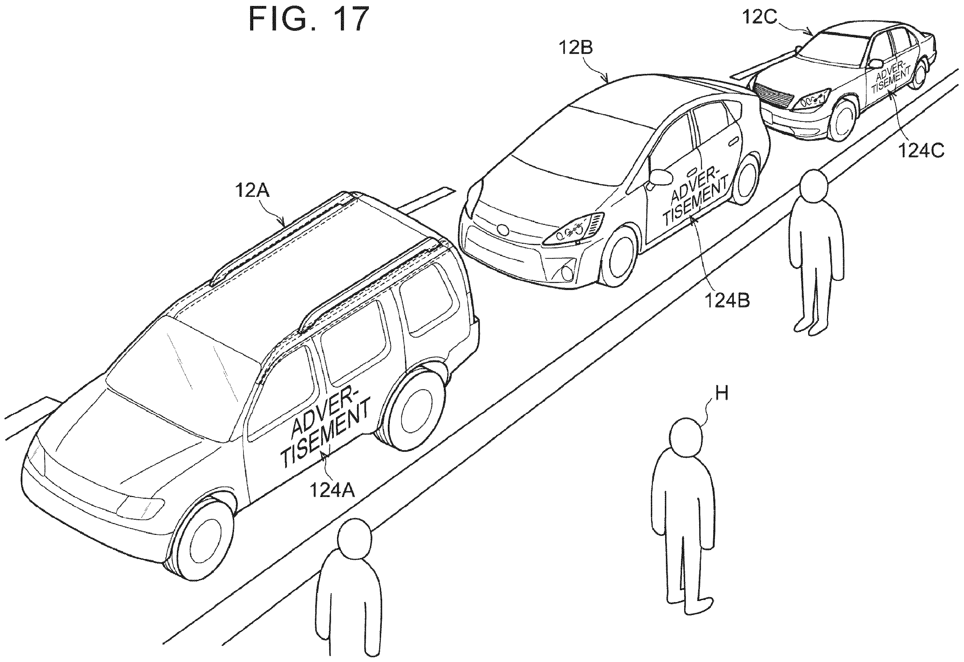

Also, the same advertisement information may be generated at the same time, from output devices of two or more vehicles present at the same location, for example. For example, as shown in FIG. 17, the management server 11 sends the same advertisement information to each of the information processing devices of the vehicles 12A, 12B, 12C. Then, when the vehicle 12A is present at a particular location, the information processing device of the vehicle 12A, as one of the two or more information processing devices, outputs advertisement information to the output device 124A provided on the vehicle 12A. Then, the information processing device of the vehicle 12B, as one of the two or more information processing devices, outputs the advertisement information to the output device 124B provided on the vehicle 12B, when the vehicle 12B is present at the particular location, at the time corresponding to the time when the information processing device of the vehicle 12A outputs the advertisement information to the output device 124A. Thus, it is possible to present an advertisement with an impact on a person H, etc. present outside the vehicle, and thus enhance the advertising effect.

When the advertisement information is moving image information, for example, images at respective points in time of the moving image information may be generated from output devices of different vehicles. For example, as shown in FIG. 17, when a person H is present at a certain location, and advertisement information in the form of moving image information is generated from a vehicle, the person H may not be able to see the moving image to the end because the vehicle goes away. Thus, after a certain portion of the moving image information is generated from a certain vehicle, the advertisement presentation system controls each device, so that subsequent moving image information is generated from the following vehicle or vehicles. More specifically, the advertisement presentation system specifies two or more vehicles traveling substantially at the same time on the same route, and outputs advertisement movies to the vehicles, with a time difference provided according to the traveling speed of each vehicle. In this case, as shown in FIG. 17, for example, when the vehicle 12A is present at a particular location, the information processing device of the vehicle 12A, as one of the information processing devices of the vehicles 12A, 12B, 12C, outputs a first-clock-time image (for example, image of time t to t+3 of the moving image information), as a part of the advertisement information, to the output device 124A provided on the vehicle 12A. Then, when the vehicle 12B is present at the particular location, the information processing device of the vehicle 12B, as one of the information processing devices of the vehicles 12A, 12B, 12C, outputs a second-clock-time image (for example, image of time t+4 to t+7 of the moving image information), as another part of the advertisement information, to the output device 124B provided on the vehicle 12B. Then, when the vehicle 12C is present at the particular location, the information processing device of the vehicle 12C outputs a third-clock-time image (for example, image of time t+8 to t+11 of the moving image information), as another part of the advertisement information, to the output device 124C provided on the vehicle 12C. In this manner, the person H present outside the vehicle can see the advertisement information in the form of moving image information to the end, and the advertisement effect can be enhanced.

Also, for example, a series of items of advertisement information related to a particular object may be generated from output devices of two or more vehicles. For example, as a series of items of advertisement information related to a certain sightseeing destination, advertisement information for introducing the sightseeing destination is generated from an output device of a first vehicle, then advertisement information for introducing aircraft used when traveling toward the sightseeing destination is generated from an output device of a second vehicle following the first vehicle, and then advertisement information for introducing accommodation at the sightseeing destination is generated from an output device of a third vehicle following the second vehicle. In this case, as shown in FIG. 17, for example, when the vehicle 12A is present at a particular location, the information processing device of the vehicle 12A, as one of the information processing devices of the vehicles 12A, 12B, 12C, outputs a first item of advertisement information (e.g., advertisement information for introducing a sightseeing destination), to the output device 124A provided on the vehicle 12A. Also, when the vehicle 12B is present at the particular location, the information processing device of the vehicle 12B, as one of the information processing devices of the vehicles 12A, 12B, 12C, outputs a second item of advertisement information (e.g., advertisement information for introducing aircraft used for traveling toward the sightseeing destination), to the output device 124B provided on the vehicle 12B. Then, when the vehicle 12C is present at the particular location, the information processing device of the vehicle 12C outputs a third item of advertisement information (e.g., advertisement information for introducing accommodation at the sightseeing destination), to the output device 124C provided on the vehicle 12C. Further, advertisement information for introducing a travel agency may be generated from a further following vehicle. In this manner, the person H present outside the vehicle can see the series of items of advertisement information related to the particular object, and the advertising effect can be enhanced.

## Claims

1. An advertisement presentation system (10) comprising:
an output device (124, 124A) provided on a mobile object (12, 12A, 12B, 12C);
an information processing device (120, 120A); and
a management device (11), wherein
the management device (11) is configured to obtain advertisement information to be generated from the output device (124, 124A) of the mobile object (12, 12A, 12B, 12C) that is scheduled to travel via a particular location, based on related information in which attribute information indicating attributes of people and location information indicating a location at which the people having the attributes are present are related to each other in advance, and send the advertisement information to the information processing device (120, 120A),
the information processing device (120, 120A) is configured to receive the advertisement information sent from the management device (11), and output the advertisement information to the output device (124, 124A), when the mobile object is present at the particular location, and
the output device (124, 124A) is configured to obtain the advertisement information generated from the information processing device (120, 120A), and output the advertisement information toward an outside of the mobile object (12, 12A, 12B, 12C), when the mobile object is present at the particular location.

2. An advertisement presentation system (210) comprising:
an output device (124A) provided on a mobile object (12A, 12B, 12C);
an information processing device (120A);
a management device (211); and
a plurality of ordering devices (14A, 14B, 14C), wherein
the management device (211) is configured to send a plurality of items of ordering information each including location information indicating a location at which advertising is performed, to each of the ordering devices (14A, 14B, 14C),
each of the ordering devices (14A, 14B, 14C) is configured to obtain the items of ordering information sent from the management device (211), and present the items of ordering information to a user,
each of the ordering devices (14A, 14B, 14C) is configured to obtain bid information as a combination of one of the items of ordering information selected by the user, and price information indicating a price for the selected item of ordering information, and send the bid information obtained, to the management device (211),
the management device (211) is configured to specify bid information of which the price information indicates the highest price, out of the bid information sent from the ordering devices (14A, 14B, 14C), as successful bid information, and obtain advertisement information sent from one of the ordering devices which sent the bid information corresponding to the successful bid information, the advertisement information indicating an advertisement to be generated from the output device (124A) of the mobile object (12A, 12B, 12C) scheduled to travel via a particular location, the management device (211) being configured to send the advertisement information to the information processing device (120A),
the information processing device (120A) is configured to receive the advertisement information sent from the management device (211), and output the advertisement information to the output device (124A), when the mobile object is present at the particular location, and
the output device (124A) is configured to obtain the advertisement information generated from the information processing device (120A), and output the advertisement information toward an outside of the mobile object, when the mobile object (12A, 12B, 12C) is present at the particular location.

3. The advertisement presentation system (10) according to claim 1, wherein:
the related information comprises information in which the attribute information, the location information, and time slot information indicating a time slot during which the people having the attributes are present at the location, are related to each other in advance;
the management device (11) is configured to obtain advertisement information to be generated from the output device (124, 124A) of the mobile object (12, 12A, 12B, 12C) scheduled to travel via a particular location during a particular time slot, based on the related information, and send the advertisement information to the information processing device (120, 120A);
the information processing device (120, 120A) is configured to receive the advertisement information sent from the management device (11), and output the advertisement information to the output device (124, 124A), when the mobile object (12, 12A, 12B, 12C) is present at the particular location during the particular time slot; and
the output device (124, 124A) is configured to obtain the advertisement information generated from the information processing device (120, 120A), and output the advertisement information toward the outside of the mobile object (12, 12A, 12B, 12C), when the mobile object is present at the particular location during the particular time slot.

4. The advertisement presentation system (210) according to claim 2, wherein
the management device (211) is configured to send the items of ordering information further including time slot information indicating a time slot during which advertising is performed, to each of the ordering devices (14A, 14B, 14C);
the management device (211) is configured to obtain advertisement information to be generated from the output device (124A) of the mobile object (12A, 12B, 12C) that is scheduled to travel via a particular location during a particular time slot, and send the advertisement information to the information processing device (120A);
the information processing device (120A) is configured to receive the advertisement information sent from the management device (211), and output the advertisement information to the output device (124A), when the mobile object (12A, 12B, 12C) is present at the particular location during the particular time slot; and
the output device (124A) is configured to obtain the advertisement information generated from the information processing device (120A), and output the advertisement information toward the outside of the mobile object (12A, 12B, 12C), when the mobile object is present at the particular location during the particular time slot.

5. The advertisement presentation system (10; 210) according to any one of claims 1 to 4, wherein:
the management device (11; 211) is configured to send list information including a plurality of items of advertisement candidate information to which the location information and time slot information are related, to the information processing device (120, 120A);
the information processing device (120, 120A) is configured to receive the list information sent from the management device, and present the list information to an occupant of the mobile object (12, 12A, 12B, 12C);
the information processing device (120, 120A) is configured to obtain selection information indicating one of the items of advertisement candidate information selected by the occupant, from the list information, and send the obtained selection information to the management device (11; 211);
the management device (11; 211) is configured to receive the selection information sent from the information processing device (120, 120A), obtain advertisement information corresponding to the received selection information, and send the advertisement information to the information processing device (120, 120A);
the information processing device (120, 120A) is configured to receive the advertisement information sent from the management device (11; 211), and output the advertisement information to the output device (124, 124A); and
the output device (124, 124A) is configured to obtain the advertisement information generated from the information processing device (120, 120A), and output the advertisement information toward the outside of the mobile object (12, 12A, 12B, 12C).

6. The advertisement presentation system (10; 210) according to any one of claims 1 to 5, wherein:
the information processing device (120, 120A) is configured to obtain track record information as a traveling route representing a series of position information of the mobile object (12, 12A, 12B, 12C) when the advertisement information is generated from the output device (124, 124A) toward the outside of the mobile object, and send the track record information obtained, to the management device (11; 211); and
the management device (11; 211) is configured to receive the track record information sent from the information processing device (120, 120A).

7. The advertisement presentation system (10; 210) according to any one of claims 1 to 6, wherein:
the information processing device (120, 120A) is configured to send a scheduled traveling route of the mobile object (12, 12A, 12B, 12C) to the management device (11; 211); and
the management device (11; 211) is configured to receive the scheduled traveling route sent from the information processing device (120, 120A), obtain advertisement information to be generated from the output device (124, 124A) of the mobile object (12, 12A, 12B, 12C), according to the scheduled traveling route, and send the advertisement information to the information processing device (120, 120A).

8. The advertisement presentation system (10; 210) according to any one of claims 1 to 7, wherein:
the management device (11; 211) is configured to send the advertisement information to each of a plurality of the information processing devices (120, 120A) including a first information processing device (120A) and a second information processing device;
when a first mobile object (12A) is present at a particular location, the first information processing device (120A) is configured to output the advertisement information to a first output device (124A) provided on the first mobile object (12A); and
when a second mobile object (12B) is present at the particular location, at a time corresponding to a time at which the first information processing device (120A) outputs the advertisement information to the first output device (124A), the second information processing device is configured to output the advertisement information to a second output device (124B) provided on the second mobile object (12B).

9. The advertisement presentation system (10; 210) according to any one of claims 1 to 7, wherein:
the advertisement information comprises moving image information;
the management device (11; 211) is configured to send the advertisement information to each of a plurality of the information processing devices (120, 120A) including a first information processing device (120A) and a second information processing device;
when a first mobile object (12A) is present at a particular location, the first information processing device (120A) is configured to output a first-clock-time image as a first part of the advertisement information, to a first output device (124A) provided on the first mobile object (12A); and
when a second mobile object (12B) is present at the particular location, the second information processing device is configured to output a second-clock-time image as a second part of the advertisement information, to a second output device (124B) provided on the second mobile object (12B).

10. The advertisement presentation system (10; 210) according to any one of claims 1 to 7, wherein:
the management device (11; 211) is configured to send the advertisement information to each of a plurality of the information processing devices (120, 120A) including a first information processing device (120A) and a second information processing device;
when a first mobile object (12A) is present at a particular location, the first information processing device (120A) is configured to output first advertisement information to a first output device (124A) provided on the first mobile object (12A); and
when a second mobile object (12B) is present at the particular location, the second information processing device is configured to output second advertisement information to a second output device (124B) provided on the second mobile object (12B).

11. An advertisement presenting method executed by an advertisement presentation system (10) including an output device (124, 124A) provided on a mobile object (12, 12A, 12B, 12C), an information processing device (120, 120A), and a management device (11), the advertisement presenting method comprising:
causing the management device (11) to obtain advertisement information to be generated from the output device (124, 124A) of the mobile object (12, 12A, 12B, 12C) that is scheduled to travel via a particular location, based on related information in which attribute information indicating attributes of people and location information indicating a location at which the people having the attributes are present are related to each other in advance, and send the advertisement information to the information processing device (120, 120A);
causing the information processing device (120, 120A) to receive the advertisement information sent from the management device (11), and output the advertisement information to the output device (124, 124A), when the mobile object (12, 12A, 12B, 12C) is present at the particular location; and
causing the output device (124, 124A) to obtain the advertisement information generated from the information processing device (120, 120A), and output the advertisement information toward an outside of the mobile object (12, 12A, 12B, 12C), when the mobile object is present at the particular location.

12. An advertisement presenting method executed by an advertisement presentation system (210) including an output device (124A) provided on a mobile object (12A, 12B, 12C), an information processing device (120A), a management device (211), and a plurality of ordering devices (14A, 14B, 14C), the advertisement presenting method comprising:
causing the management device (211) to send a plurality of items of ordering information including location information indicating a location at which advertising is performed, to each of the ordering devices (14A, 14B, 14C);
causing each of the ordering devices (14A, 14B, 14C) to obtain the items of ordering information sent from the management device (211), and present the items of ordering information to a user;
causing each of the ordering devices (14A, 14B, 14C) to obtain bid information as a combination of one of the items of ordering information selected by the user, and price information indicating a price for the selected item of ordering information, and send the bid information obtained, to the management device (211);
causing the management device (211) to specify bid information of which the price information indicates the highest price, out of the bid information sent from the ordering devices (14A, 14B, 14C), as successful bid information, and obtain advertisement information sent from one of the ordering devices which sent the bid information corresponding to the successful bid information, the advertisement information indicating an advertisement to be generated from the output device (124A) of the mobile object (12A, 12B, 12C) scheduled to travel via a particular location, the management device (211) being caused to send the advertisement information to the information processing device (120A);
causing the information processing device (120A) to receive the advertisement information sent from the management device (211), and output the advertisement information to the output device (124A), when the mobile object (12A, 12B, 12C) is present at the particular location; and
causing the output device (124A) to obtain the advertisement information generated from the information processing device (120A), and output the advertisement information toward an outside of the mobile object (12A, 12B, 12C), when the mobile object is present at the particular location.
